# EUROPEAN PATENT SPECIFICATION

(11) **EP 1 455 076 B1**
(45) Date of publication and mention of the grant of the patent: **13.04.2011**
(21) Application number: 04290501.8
(22) Date of filing: 25.02.2004
(51) Int. Cl.: F02K 9/42, F02K 9/68

(54) **Propulsion device, flying object comprising the same and propulsion device igniting method**
Schubvorrichtung, fliegendes Objekt mit derselben und Zündverfahren für eine Schubvorrichtung
Dispositif de propulsion, objet volant ainsi équipé et procédé d'allumage d'un dispositif de propulsion

(30) Priority: 26.02.2003 JP 2003049481
(43) Date of publication of application: 08.09.2004
(73) Proprietor: MITSUBISHI HEAVY INDUSTRIES, LTD., Tokyo (JP)
(72) Inventor: Moriai, Hideki, Higashi Tanaka Komaki-shi Aichi-ken (JP); Yasutake, Akinori, 5-chome Nagasaki-shi Nagasaki-ken (JP); Tsutaya, Hiroyuki, 5-chome Nagasaki-shi Nagasaki-ken (JP); Nishida, Mitsumura, 5-chome Nagasaki-shi Nagasaki-ken (JP)
(74) Representative: Intès, Didier Gérard André

(56) References cited:
- WO-A-02/095207
- US-A- 3 056 663
- US-A- 4 211 072
- US-A- 4 288 982
- US-A1- 2002 092 290

## Description

### BACKGROUND OF THE INVENTION

### Field of the Invention

The present invention generally relates to a propulsion device and igniting method thereof and more specifically to a propulsion device and igniting method thereof both excellent in a response performance as required for attitude control of an artificial satellite, lunar probe, planet probe, on-trajectory work station, launch vehicle or other aerospace craft.

### Description of the Prior Art

As a bi-liquid type propulsion device using a liquid fuel and liquid oxidizer as propellant, such one as uses dinitrogen tetraoxide (hereinafter referred to as NTO) as oxidizer and monomethylhydrazine (hereinafter referred to as MMH) as fuel is known. Such a bi-liquid type propulsion device is preferably used for attitude control or trajectory change of an artificial satellite, on-trajectory work station, lunar or planet probe, launch vehicle or other aerospace craft.

But NTO or MMH, being a highly toxic chemical species, requires a special consideration for handling of safety and also has an environmental risk if it leaks out. Hence, studies for changing-over to a less toxic oxidizer are being carried out.

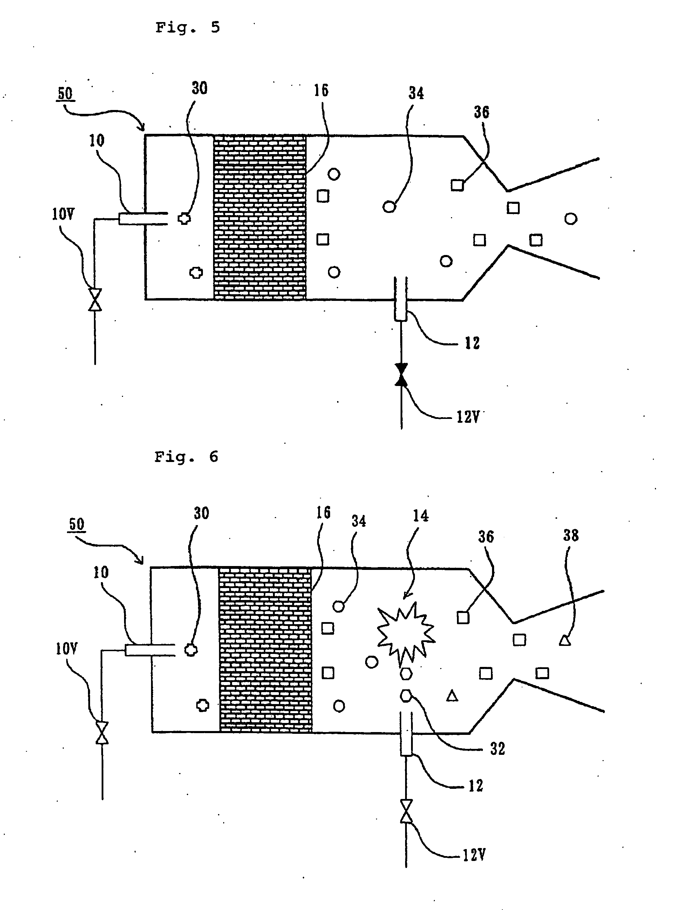

As a less toxic oxidizer, hydrogen peroxide (hereinafter sometimes referred to as H₂O₂) is known. Also, as an operating method of a propulsion device, as designated by reference numeral 50 in Figs. 5 and 6, that uses hydrogen peroxide as oxidizer, a mono-liquid mode and bi-liquid mode are known.

Fig. 5 is a schematic cross sectional view showing the mono-liquid mode of the propulsion device 50 in the prior art.

In the mono-liquid mode, the operation is done such that an oxidizer 30, that is, hydrogen peroxide as a first liquid, is supplied from an oxidizer supply means 10, this hydrogen peroxide is decomposed through a catalyst 16 so that a high temperature oxygen gas 34 and high temperature steam 36 are generated and then the high temperature oxygen gas 34 and high temperature steam 36, as they are, are jetted out of the propulsion device 50 to thereby obtain a thrust. Such a propulsion device 50 is also called a mono-liquid type thruster in this field of the industry.

Fig. 6 is a schematic cross sectional view showing the bi-liquid mode of the propulsion device 50 in the prior art.

In the bi-liquid mode, the operation is done such that the high temperature oxygen gas 34 and high temperature steam 36 both obtained by the mono-liquid mode are supplied with fuel 32 as a second liquid from a fuel supply means 12 so that the high temperature oxygen gas 34, high temperature steam 36 and fuel 32 are mixed together in a combustion chamber 14. Thus, by a reaction of the fuel 32 with the high temperature oxygen gas 34, a high temperature carbon dioxide 38 together with the high temperature steam 36 is obtained and this is also jetted out of the propulsion device 50 to thereby obtain a larger thrust or specific thrust. Such a propulsion device 50 is also called a bi-liquid type thruster in the field. The bi-liquid type thruster is more preferably used than the mono-liquid type thruster in case where a high specific thrust is needed and a large propellant tank is provided.

It is to be noted that the term "specific thrust" is used to mean the thrust per unit weight of the propellant and that the term "propellant" is used to collectively mean the fuel and oxidizer.

By the way, the start itself of the propulsion device 50 cannot be done by the bi-liquid mode. For the operation of the propulsion device 50 by the bi-liquid mode, such steps are needed that, while a fuel supply valve 12V is closed, an oxidizer supply valve 10V is opened so that the start is done by the mono-liquid mode and, after the temperature and pressure in the combustion chamber 14 are sufficiently elevated so that a necessary condition of temperature and pressure for ignition of the fuel 32 is secured, the fuel supply valve 12V is opened to start jetting of the fuel 32 and the operation is thereby shifted to the bi-liquid mode. As the propulsion device 50 is first started by the mono-liquid mode and then the operation is shifted to the bi-liquid mode, there is caused a time difference of several seconds for the shift of the mode, although the time difference changes according to the type of device and condition of operation. For this reason, the bi-liquid mode is not always appropriately used, especially in case where a high response performance or responsibility is required, such as in a propulsion device for attitude control of an artificial satellite or in a propulsion device for direction change of an aerospace craft.

Further, in such a system where the start is done by the mono-liquid mode and then the operation is shifted to the bi-liquid mode, there are needed various means for detecting temperature and pressure in the combustion chamber 14 or for deciding the time of the shift and this involves a weight increase or complicated structure.

Also, if a combination of hydrogen peroxide and pure fuel is used, it may lead to a less ignitable property as compared with the combination of NTO and MMH as the conventionally used toxic propellant. That is, while the combination of NTO and MMH has a self-ignitability, the combination of hydrogen peroxide and pure fuel is weak in such a property. Thus, if this property is to be made up, it is necessary for the upstream hydrogen peroxide to pass through thick layers of catalyst to be decomposed to become a high temperature gas appropriate for ignition and the thick layers of catalyst used therefore involve a weight increase. For this reason also, the bi-liquid type propulsion device is expected to be made lighter in weight than the propulsion device using NTO and MMH.

While details of mechanism of ignition are not made clear yet, it is widely known in the field that a mixture of hydrogen peroxide and organic fuel has an explosive nature.

It is to be noted that, as another method to enhance the response performance of a propulsion device, such one is known that a metallic compound, amine, etc. is added to fuel as an additive for enhancing the ignition performance or a highly reactive azide, etc. are used as a main component of the fuel so that the fuel is given self-ignitability with hydrogen peroxide. (See Patent Document 1, for example) Patent Document 1: USP5932837 (Especially. ABSTRACT)

However, the propulsion device shown in the Patent Document 1 has shortcomings, such as a contamination of the surroundings of an aerospace craft due to toxicity of the exhaust gas and solid wastes contained in the exhaust gas, a blockage of the combustion chamber, etc. and the area for which the propulsion device is used is limited. Also, if an azide is used, handling thereof is difficult and the area of use is further limited,

Another type of apparatus connected with the field of propulsion devices is also known from US patent n°2002/0092290 A1, which discloses a propulsion device and a propulsion device igniting method as defined in the preambles of claims 1 and 7. This patent discloses an apparatus for burning a fuel and nitrous oxide as oxidizer, in which only the oxidizer is injected onto a mesh disk, this latter possibly acting as a catalyst.

PCT Patent WO 02/095207 A1 discloses a reactor that could be used in another type of propulsion device. It discloses a reactor for decomposition of ammonium dinitramide-based liquid monoliquids.

US Patent n°4 211 072 discloses a device for the thermal decomposition of liquid fuels. According to this prior art, the fuel is to be introduced into a recess in a porous body of metallic foam material contained in a closed housing. Hydrazine is particularly cited as a fuel to be used with this device.

### SUMMARY OF THE INVENTION

It is therefore an object of the present invention to provide a propulsion device using a safer propellant and yet having both of a large thrust and high response performance. Also, it is an object of the present invention to provide an igniting method of the propulsion device using a safer propellant and having a high response performance.

In order to achieve the objects mentioned above, the present invention is characterized in that said propulsion device further comprises hydrogen peroxide stored in said oxidizer storing means, and in that the liquid fuel supply means and the oxidizer supply means are provided respectively to jet the liquid fuel and the oxidizer toward substantially the same position of said surface area increasing means.

By employing this construction, such a temperature environment that hydrogen peroxide as oxidizer easily reacts with fuel for ignition or such a colliding and mixing environment that the oxidizer easily collides with the fuel and easily mixes with the fuel can be realized. More concretely, the oxidizer and fuel are simultaneously jetted toward the preheated surface area increasing means. By so doing, the oxidizer and fuel, while they are mixing with each other, are efficiently heated by the preheated surface area increasing means and, at the same time, the reaction is rapidly accelerated to effect an instantaneous ignition. It will be more effective, if the oxidizer and/or fuel, before they collide with the surface area increasing means, are atomized by an appropriate means and then they are brought into contact with the surface area increasing means. While a detailed mechanism such that a mixture of oxidizer and fuel effects an explosive ignition on a high temperature surface member is not made clear yet, such a phenomenon is widely known in the field. Also, while H₂O₂ as oxidizer passes through catalyst layers positioned upstream of the combustion chamber, it is decomposed to thereby generate H₂O₂ decomposed hot gas. The jetted fuel spreads on the surface area increasing means so that its surface area is increased and thereby the contact area of the H₂O₂ decomposed hot gas also becomes larger and the instantaneous ignition is effected.

Herebelow, the propulsion device and igniting method thereof according to the present invention will be described more in detail.

A first aspect of the present invention is a propulsion device that comprises a preheating means provided in a combustion chamber, a liquid fuel supply means opening toward the combustion chamber, a surface area increasing means provided in the combustion chamber and an oxidizer supply means opening toward the combustion chamber. H₂O₂ and an organic matter (fuel), when they are mixed together, have an explosive nature but their self-ignitability is small enough so that no instantaneous ignition is caused. But according to the propulsion device of the first aspect of the present invention, the H₂O₂ and fuel, respectively, are supplied (jetted) toward substantially the same position on the surface area increasing means to thereby collide with each other.

Thus, by a bi-liquid type thruster using the less toxic propellant, there is obtained an effect that a response performance and compactness of the device substantially the same as in the above mentioned bi-liquid type toxic propellant thruster can be realized.

The propulsion device comprises a preheating means, that supplies heat, connected to the surface area increasing means. According to this propulsion device, the surface area increasing means has not only its own surface area increasing function but also a preheating function. Thus, there is obtained an advantage of weight alleviation.

A second aspect of the present invention is a propulsion device that is characterized in that, additionally to the first aspect, the surface area increasing means is formed in a net shape, a laminated net shape in which a plurality of nets are laminated or a honeycomb shape. According to this propulsion device, the weight of the surface area increasing means can be alleviated, thereby reducing the mass of the surface area increasing means. Hence, heat quantity required for the temperature elevation can be reduced and the preheating can be done quickly.

A third aspect of the present invention is a propulsion device that is characterized in that, additionally to the first two aspects, a chemical species of the surface area increasing means is any one or more selected from the group of silver, platinum, palladium, ruthenium and iridium. According to this propulsion device, the surface area increasing means has not only its own surface area increasing function but also a function as a decomposition catalyst to decompose the hydrogen peroxide. Thus, a smooth ignitability and high response performance can be realized.

Nothing of the present invention excludes to employ a metal, nickel for example, that is not mentioned in the above group as the chemical species of the surface area increasing means. But if a metal not mentioned in the above group is used, a possibility of occurrence of a hard ignition becomes high. The hard ignition means an explosive ignition in which a large quantity of propellant instantaneously reacts due to ignition delay and this is not preferable in view of the reliability of the parts and components. Hence, as the chemical species enumerated in this third aspect are all precious metals having a catalytic performance to decompose H₂O₂, the problem of the hard ignition can be easily avoided consequentially. The mechanism of the hard ignition and avoidance thereof will be described later. It is to be noted that, in case where a requirement for the reliability of the parts and components is comparatively small, a heat resistant alloy of a comparatively low cost can be employed to thereby realize a cost reduction. As such a heat resistant alloy, nickel alloy or niobium alloy is known.

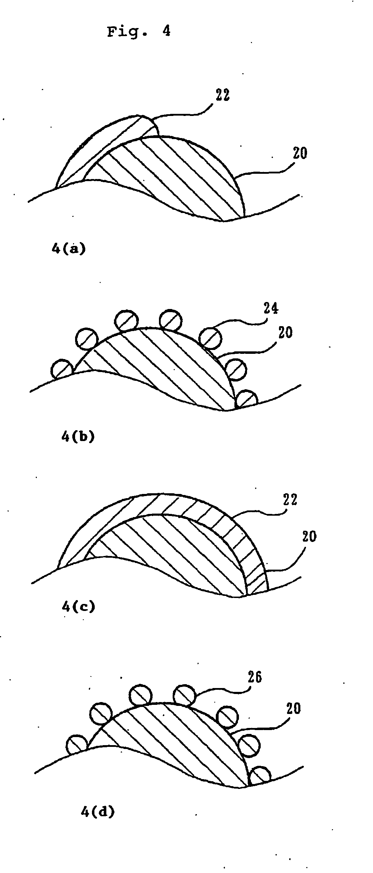

Next, several modes of using one kind or more kinds of the precious metals will be described with reference to Figs. 4(a) to 4(d). Figs. 4(a) to 4(d), respectively, show cross sections of wires forming a metal-made net or wire 18, as described later, as the surface area increasing means. In these respective figures, while cross sections of a clod or solid form 20 of a first chemical species forming the wires, cross sections of fine particles 26 of the first chemical species and cross sections of fine particles 24 of a second chemical species are shown in circular shapes, it is a matter of course that the cross sections of these wires and particles of the present invention are not limited to the circular shapes.

As the mode using a plurality of the herein enumerated chemical species, there can be various forms of realization, for example, a form having a portion of a surface of the clod 20 of the first chemical species covered with a plated layer 22 of the second chemical species, as shown in Fig. 4(a), a form having the surface of the clod 20 of the first chemical species supporting the fine particles 24 of the second chemical species, as shown in Fig. 4(b), a form having a net of the first chemical species and a net of the second chemical species alternately laminated on each other, and a form having a surface of a clod of a chemical species not enumerated herein supporting particles of the first chemical species and particles of the second chemical species. It is a matter of course that the chemical species of three kinds or more can also be mixedly used.

Also, as the mode using only one kind of the chemical species enumerated herein, there can be employed a form having the entire surface of the clod 20 of the first chemical species covered with a plated layer 22 of the second chemical species, as shown in Fig. 4(c). More concretely, as the first chemical species, a kind of a comparatively low cost is employed among the abovementioned precious metals and as the second chemical species, a kind of a comparatively high cost is employed among the precious metals. Thus, apparently, the surface of the net 18 only of the second chemical species is exposed to be used. In this form, even if the plated layer of the second chemical species is peeled off, the surface of the first chemical species is exposed in turn so that the same or similar effect as in the abovementioned forms using the plurality of chemical species can be continuously obtained. Thus, by the surface area increasing means constructed as mentioned above, an effect to reduce the quantity of use of the expensive precious metals can be realized. If a large sized hardware is to be manufactured, there can be not only obtained a large cost reduction but also realized an optimization of the activation of the catalyst surface condition. As a matter of course, such a form as having a surface of a clod of a chemical species not enumerated herein covered with a plated layer of the chemical species enumerated herein can be also employed. For example, in order to reduce the quantity of use of silver, such a method that a wire (net) of nickel alloy or stainless steel is applied with silver plating is known.

By applying plating of the first chemical species to the surface of the clod of the first or second chemical species, a minute roughness of the surface or an increase of the surface area can be realized. This can be done by optimally carrying out the control of the electric current density in the plating process. For example, in a silver net manufactured by wire materials, the surface is relatively flat. But it is known that, if the wire materials are previously applied with silver plating or the silver net is applied with silver plating, then the minute roughness of the surface can be increased.

Also, as a variation to use one kind of the chemical species, such a form as having the surface of the clod 20 of the first chemical species supporting fine particles 26 of the first chemical species, as shown in Fig. 4(d), can be employed. In the surface area increasing means so constructed, as compared with the case of the clod only, the microscopic surface area per the macroscopic area is increased and an effect to enhance the reaction activation can be obtained. For example, a form having a surface of a clod of platinum supporting fine particles of platinum, that is, platinum black, corresponds to this.

Also, as another variation, where a support is made of a substance that is inactive as a decomposition catalyst to decompose the hydrogen peroxide, for example a ceramic selected from the group of alumina, silica, silica gel, etc., a form having a surface of this support supporting fine particles of the first chemical species can be employed. While the ceramic in this case may be also a ceramic that is known from the olden times, if such a ceramic as is excellent in the strength and heat resistance, that is, such one as is called a fine ceramic in the field, is used, then a reliability of the entire propulsion device can be enhanced.

### BRIEF DESCRIPTION OF THE DRAWINGS

Fig. 1 is a schematic cross sectional view showing a first embodiment of a propulsion device according to the present invention.
Fig. 2 is a schematic cross sectional view showing a variation of the first embodiment of Fig. 1.
Fig. 3 is a schematic cross sectional view showing a second embodiment of a propulsion device according to the present invention.
Fig. 4 comprises Fig. 4(a) to Fig. 4(d), wherein Figs. 4(a) to (d) respectively show cross sections of wires that form a metal-made net provided in a propulsion device according to the present invention.
Fig. 5 is a schematic cross sectional view showing a mono-liquid mode of a propulsion device in the prior art.
Fig. 6 is a schematic cross sectional view showing a bi-liquid mode of a propulsion device in the prior art.

### DESCRIPTION OF THE PREFERRED EMBODIMENTS

Herebelow, the present invention will be described more in detail based on embodiments of the invention with reference to the appended drawings.

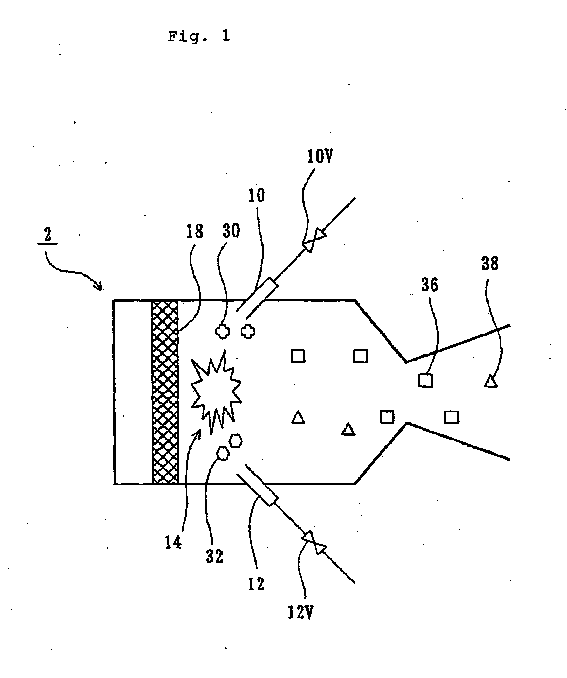

Fig. 1 is a schematic cross sectional view showing a first embodiment of a propulsion device 2 according to the present invention.

In Fig. 1, the propulsion device 2 is shown to jet exhaust gas to the right-hand direction so that the propulsion device 2 moves to the left-hand direction. A net or wire 18 made of a metal is provided in the propulsion device 2. An oxidizer 30, of which flow rate is appropriately adjusted, is supplied from an oxidizer storing means (not shown) via an oxidizer supply valve 10V and is jetted into the propulsion device 2 by an oxidizer supply means 10. Likewise, fuel 32, of which flow rate is appropriately adjusted, is supplied from a fuel storing means (not shown) via a fuel supply valve 12V and is jetted into the propulsion device 2 by a fuel supply means 12. Here, the oxidizer 30 and fuel 32, respectively, are jetted so that they are joined together at one point on the net 18, that is, for example, at a central point of the net 18 as schematically shown in Fig. 1. For this purpose, both of the oxidizer supply means 10 and fuel supply means 12 are opened inclinedly relative to a wall surface of the propulsion device 2, that is, inclinedly with an angle of about 45 degrees in the example shown in Fig. 1.

In the present propulsion device 2, it is difficult to clearly define the scope of a combustion chamber 14. But the scope of the combustion chamber 14 is generally understood to be the portion of the net 18 and the downstream vicinity thereof. This is because it is taken into consideration that the point on the net 18 where the oxidizer 30 and fuel 32 are joined together is the starting point of the combustion and that the direction to which steam 36 and carbon dioxide 38 generated by the combustion can proceed, that is, the direction to which the combustion can spread is the right-hand direction in the figure.

The reason why the downstream side of the propulsion device 2 is formed in a constricted shape is to regulate the jetting of the steam 36 and carbon dioxide 38 as well as to regulate the direction thereof. But this does not directly relate to the object of the present invention and detailed description thereof is omitted.

As the oxidizer 30, liquid hydrogen peroxide is employed. Consistency of the hydrogen peroxide is not specifically limited, but if the consistency of the hydrogen peroxide is low, a predetermined thrust cannot be obtained unless a surplus of the oxidizer 30 is loaded. This surplus of the oxidizer 30 becomes a burden and is disadvantageous. That is, in order to obtain a high specific thrust, a higher consistency is preferable. If this is considered, the consistency of the hydrogen peroxide is preferably 50% or more in weight, more preferably 80% or more in weight or most preferably 90% or more in weight and there is no upper limit in any case.

As the consistency of the hydrogen peroxide approaches to 100% in weight, a unit cost of the hydrogen peroxide increases. If eyes are put on this point only, this seems disadvantageous. But, as the consistency becomes higher, the cost of loading the surplus of the propellant can be reduced and this can sufficiently make up the disadvantage of increase of the unit cost of the hydrogen peroxide. As the loading of the surplus propellant requires loading of a further surplus propellant for launching the propellant itself, the disadvantage is more and more magnified.

Especially, if the propulsion device is used for launching a space rocket, as the flying object is launched against the gravity, even a small alleviation of the weight can bring forth a large cost reduction as a whole. As a propellant used for launching a space rocket, even if hydrogen peroxide of 99.9% in weight, for example, is used, the consistency may not be excessively high.

There is no specific limit in the shape of the oxidizer supply means 10 and a cylindrical shape or gradually enlarged tube shape, for example, can be employed.

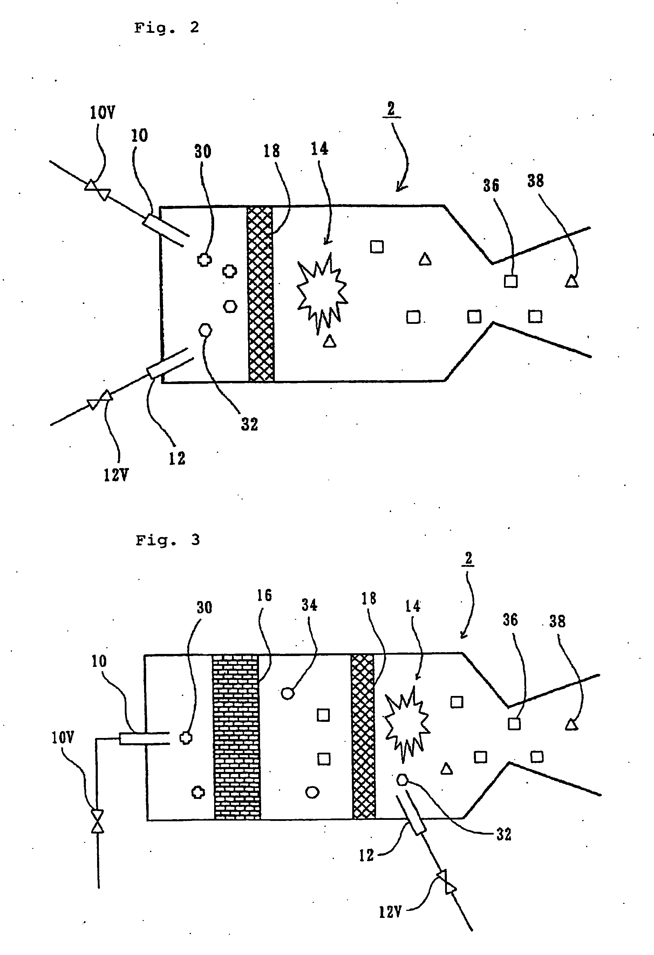

Also, as a variation of the first embodiment, if the oxidizer supply means 10 is positioned upstream of the net 18 to open orthogonally or inclinedly toward the combustion chamber, a similar effect can be obtained. Fig. 2 is a schematic cross sectional view showing a propulsion device 2 having such a construction.

It is to be noted that, in Fig. 2, the propulsion device jets the exhaust gas from the left to the right and the left hand side is the upstream side and the right hand side the downstream side.

There is no specific limit in the kind of the fuel 32 and any one of alcoholic fuel represented by ethanol, ketonic fuel represented by acetone or methyl ethyl ketone, hydrocarbonic fuel represented by JP-8, JP-10 or kerosine, amine fuel represented by tetramethylethylenediamine or triethylamine, or a combination thereof can be used. JP-8 and JP-10 are names of aerofuel well known by experts in the field.

There is no specific limit in the shape of the fuel supply means 12 and a cylindrical shape or gradually enlarged tube shape can be employed. The fuel supply means 12 opens inclinedly toward the upstream side from the downstream side of the combustion chamber. There is no specific limit in the direction of the opening. But if it is considered that the fuel is to be mixed with H₂O₂ or an instantaneous ignitability is to be obtained preferably by simultaneously heating the fuel and H₂O₂ on the net 18, it is basically preferable that the fuel and H₂O₂, respectively, are jetted toward a target on the same one point of the net 18. In the example of Fig. 1, the fuel is jetted from the right hand lower position and H₂O₂ from the right hand upper position so that imaginary lines of the respective jetting directions cross together at one point on the net 18.

In the propulsion device 2 constructed as shown in Fig. 1, as the net 18 of a thin catalyst can be used in place of the thick catalyst 16 of Figs. 5 and 6 that has been used in the prior art propulsion device 50, advantages of a compact size, light weight, low cost, etc. can be obtained. Also, the structure becomes simplified and the realibility is enhanced. Moreover, as the mono-liquid mode itself can be eliminated in the propulsion device 2 constructed as shown in Fig. 1, such a propulsion device as excellent in the startability can be obtained.

While the flow rate of the fuel 32 supplied from the fuel supply means 12 via the fuel supply valve 12V and that of the oxidizer 30 supplied from the oxidizer supply means 10 via the oxidizer supply valve 10V are different according to the kind of the fuel or type of the propulsion device, as they can be from time to time appropriately determined by experts in the field, detailed description thereof will be omitted.

Further, in the propulsion device 2 shown in Fig. 1, there is connected a preheating means (not shown) to the net 18 so that the net 18 is supplied with heat. There is no specific limit in the kind of the preheating means and a means by electric heating, infrared radiation, etc., for example, can be employed. Extent of the preheating is preferably such one that a sufficiently high temperature can be realized relative to the boiling point of the fuel 32. More concretely, in case the fuel is ethanol as alcohol, or acetone as ketone, the preheating is done preferably to the temperature of 100°C or more, more preferably of 150°C or more.

But, if not necessarily higher than the boiling point of the fuel 32, if a temperature near the temperature of the boiling point is realized, an effect to enhance the combustion performance can be obtained. This is for the reason that, at the temperature near the boiling point, vapor pressure of the fuel 32 is elevated and thereby gasification of the fuel and H₂O₂ is accelerated as well as reaction activation of the propellant is accelerated.

According to experiments using JP-10 that has a boiling point of 182°C, it is confirmed that an ignition is effected only by preheating the JP-10 to 150°C.

In the propulsion device 2 shown in Fig. 1, the material of the net 18 is silver. The net 18, made of silver, has a catalytic capability for reaction to decompose the hydrogen peroxide and the problem of the hard ignition can be avoided. Material, other than silver, having such a catalytic capability is platinum, palladium, iridium, ruthenium, etc.

Detailed mechanism of the ignition or hard ignition is not made clear yet. But the presently known phenomena are described as follows. That is, if a metal that is weak in the catalytic capability for reaction to decompose the hydrogen peroxide is used as the material of the net 18, an ignition delay becomes large so that a large amount of propellant is accumulated. Then, the reaction suddenly proceeds and a spike pulse-like high pressure is generated, thereby inviting a risk of damaging the surrounding parts and devices. Such an ignition is called the hard ignition by experts in the field. However, if the abovementioned precious metals having the catalytic capability are used as the material of the net 18, H₂O₂ is first decomposed to be gasified and oxygen generated by the gasification makes contact with the fuel to thereby effect an ignition. In this case, a mild ignition is realized as compared with the case where the liquid H₂O₂ as it is makes contact with the fuel for ignition. Such an ignition is called the mild ignition by experts in the field.

Another technical object to use the precious metals having the catalytic capability is as follows. That is, even if no ignition is effected, the object is to quickly decompose the H₂O₂ component so that it is made non-toxic to be discharged outside. That is, the object is to obtain a higher safety as compared with the case where the H₂O₂ as it is not decomposed is discharged outside of the propulsion device.

There is no large difference in the catalytic action between the above enumerated precious metals. If a low cost is preferred, silver is preferably used. On the contrary, if a durability is preferred iridium or ruthenium can be preferably used. If a compatibility of an obtainability and mild durability is preferred, platinum can be employed. Here, the durability relates to a problem of heat-resistance. That is, the problem is whether the catalyst can stand for being exposed to the combustion of long seconds of time or not. If a high heat resistant one is to be selected, such one as has a high melting point can be selected. Here, the melting point of each of the precious metals is compared as follows: iridium (2446°C)>ruthenium (2250°C) >platinum (1768°C) >palladium( 1555°C) >silver (962°C).

Also, there is no specific limit in the purity of the above enumerated precious metals. But it is preferable to use those of a high purity to the extent obtainable. This is because the weight becomes large by the extent including impurities, if the purity is low. The fact that the weight alleviation is important in the field of the present invention is as described above. As for the kind of metals that is easily obtainable, there is known platinum 900 that is on the market. This is an alloy containing platinum of 90 weight % and palladium of 10 weight %.

The preheating means connected to the net 18 for supplying heat can be provided in an arbitrary structure so that decomposition of the hydrogen peroxide can be accelerated.

### (An example of experiments)

A test device is prepared for ignition tests in simulation of material and shape of an ignition portion of a propulsion device. This test device is for confirmation not of a continuous combustion but of an ignitability of the starting time and has no combustion chamber 14. The position relation of the oxidizer supply means 10, fuel supply means 12 and net 18 is the same as shown in Fig. 1 and illustration thereof is omitted. Ethanol as the fuel 32 and H₂O₂ as the oxidizer 30 are used and a surface area increasing means of net shape is employed to form the net 18. The net 18 is made of silver and is kept in a preheated state.

In the abovementioned condition, ignition tests were carried out and an ignition of 15 millisecond after contact of the oxidizer with the fuel was confirmed. Measurement of the time was done by a high-speed photography. This ignitability is near the one obtained in a propulsion device using a toxic propellant.

Fig. 3 is a schematic cross sectional view showing a second embodiment of a propulsion device according to the present invention.

The present second embodiment is different from the first embodiment of Fig. 1 in the point, for example, that the oxidizer 30, after it has passed through a catalyst 16, becomes a H₂O₂ decomposed hot gas to enter the combustion chamber. The term "H₂O₂ decomposed hot gas" is used to collectively mean oxygen - 34 and steam 36 generated by the decomposition of H₂O₂. In the first embodiment, as soon as the oxygen 34 and steam 36 are generated by the decomposition of H₂O₂, they meet with the fuel 32, but in the second embodiment, the oxygen 34 and steam 36 generated by the decomposition of H₂O₂ while it passes through the catalyst 16 meet with the fuel 32 on the net 18. While there is a slight time delay until the H₂O₂ decomposed hot gas meets with the fuel 32 in the second embodiment, the effect exhibited by both of the embodiments is the same in consequence.

Also, the point that the oxidizer 30 is jetted in parallel with the axial direction of the propulsion device 2 is different from the first embodiment. But the fact that the oxidizer 30 meets with the fuel 32 at one point on the net 18 is the same as in the first embodiment and the effect exhibited by both of the embodiments is also the same.

The present second embodiment is made such that the main point of the conventional H₂O₂ bi-liquid type thruster is improved. In the conventional H₂O₂ thruster, the fuel is directly jetted in the high temperature H₂O₂ decomposed gas. While this method enables a stable ignition, as it is necessary to blow the fuel in the state that the temperature and pressure of the decomposed gas are sufficiently elevated by the mono-liquid mode, there is a problem that it takes time to shift to the bi-liquid mode, as mentioned before. Hence, this problem is improved in the present second embodiment. That is, the fuel is jetted onto the preheated surface area increasing means and thereby a portion of the fuel is gasified and the retaining fuel is also spread on the surface area increasing means. Thus, the contact surface area and contact time of the fuel with the decomposed gas generated by the decomposition of H₂O₂ can be increased. By the propulsion device constructed as mentioned above, the ignitability can be enhanced and the response performance can also be enhanced.

Also, even in the case that the requirement for the response performance as a propulsion device is not very severe, the present second embodiment can exhibit the effect as follows; That is, as the result of the enhanced ignitability, the volume of the combustion chamber 14 necessary for the ignition reaction can be reduced and the weight of the combustion chamber 14 can also be alleviated. This enables the propulsion device 2 itself to be made smaller and lighter. Here, if the propulsion device is started by the mono-liquid mode, the net 18 can be preheated by heat of the decomposed hot gas itself generated by the decomposition of the hydrogen peroxide and thereby a predetermined performance can be obtained.

The net 18, preferably the preheated metal net, of the second embodiment is arranged between the generated gas obtained by the decomposition of H₂O₂ and the fuel 32. Thereby, the gasification of the fuel 32 and the reaction activation of the fuel 32 with the generated gas can be accelerated. It is to be noted that the effect obtained by the increase of the contact surface area is the same as in the first embodiment.

A heating means is provided between the oxidizer supply means 10 and combustion chamber 14. Thereby, the decomposition of the hydrogen peroxide is accelerated so as to realize a smooth ignition and a high response performance as a propulsion device can be obtained.

In the second embodiment, while the mono-liquid mode cannot be eliminated, the necessary time for the mono-liquid mode can be reduced. In the second embodiment, the condition of pressure and temperature required for shifting to the bi-liquid mode from the mono-liquid mode can be mitigated as compared with the conventional propulsion device. More concretely, even if the surrounding pressure or temperature is comparatively low, shifting to the bi-liquid mode can be done. Thereby, the time to shift to the bi-llquid mode after the start by the mono-liquid mode can be reduced. Also, the combustion chamber can be designed smaller.

The propulsion device of the present invention, as described above, has a high response performance and is made in a compact size, as compared with the conventional bi-liquid type thruster using H₂O₂. Also, with respect to any of the response performance, specific impulse, compactness and simplicity, the propulsion device of the present invention has a performance near the conventional toxic propellant thruster using the combination of NTO and MMH and yet can avoid the difficulty of handling caused by the high toxicity of NTO and MMH.

Thus, the propulsion device of the present invention can be preferably applied to the attitude control of a flying object that requires a quick attitude control, such as an artificial satellite, on-trajectory working station, lunar probe, planet probe, guided aerospace craft, launching rocket, etc.

If the flying object is a guided aerospace craft or launching rocket, a main propulsion device can be separately provided for propulsion only and the propulsion device of the present invention can be used as a sub-propulsion device, that is, an exclusive attitude control device. The propulsion device exclusive for the attitude control can exhibit its effect even with a small thrust. But in order to control the attitude in an arbitrary direction, it is preferable to provide a plurality of the propulsion devices exclusive for the attitude control. The term "attitude control" as used herein includes to correct or change the trajectory on which the flying object moves.

In every kind of the flying object, it is a matter of course that the main propulsion device and sub-propulsion device can be provided by the propulsion device of the present invention. But, as a single propulsion device can hardly control the attitude, it is preferable that the flying object is provided with a plurality of the propulsion devices.

Also, if the flying object is of a type that moves on the trajectory without a propulsion drive force, as there is needed no main propulsion device, it can only have the propulsion device of the present invention. As such a flying object, an artificial satellite can be named, for example.

### EFFECT OF THE INVENTION

According to the present invention, a propulsion device using a non-toxic propellant and yet having both of a high thrust or specific thrust and a high response performance can be provided. Also, according to the present invention, a flying object excellent in the attitude control performance can be provided.

## Claims

1. A propulsion device comprising:
a combustion chamber (14),
a liquid fuel supply means (12) opening toward said combustion chamber,
a surface area increasing means (18) provided in said combustion chamber (14),
a preheating means provided in said combustion chamber and connected to said surface area increasing means (18) for supplying heat,
an oxidizer supply means (10) opening toward said combustion chamber (14), and
an oxidizer storing means connected to said oxidizer supply means (10),
**characterized in that** said propulsion device further comprises hydrogen peroxide stored in said oxidizer storing means, and that the liquid fuel supply means (12) and the oxidizer supply means (10) are arranged respectively to jet the liquid fuel and the oxidizer toward the same position on said surface area increasing means (18).

2. A propulsion device as claimed in Claim 1, **characterized in that** said surface area increasing means (18) is formed in any one shape selected from the group of a net shape, a laminated net shape in which a plurality of nets are laminated and a honeycomb shape.

3. A propulsion device as claimed in Claim 1 or 2, **characterized in that** a chemical species of said surface area increasing means (18) is any one or more selected from the group of silver, platinum, palladium, ruthenium and iridium.

4. A propulsion device as claimed in Claim 3, **characterized in that** said surface area increasing means (18) comprises a support made of a ceramic and a catalyst arranged in contact with said support and a chemical species of said catalyst is any one or more selected from the group of silver, platinum, palladium, ruthenium and iridium.

5. A flying object comprising a propulsion device as claimed in any one of Claims 1 to 4.

6. A flying object as claimed in Claim 5, **characterized in that** said flying object is any one of an artificial satellite, an on-trajectory working station, a lunar probe, a planet probe, a guided aerospace craft and a launch vehicle.

7. A propulsion device igniting method comprising the steps of;
preheating a surface area increasing means (18) provided in a combustion chamber (14),
supplying a liquid fuel (32) into said combustion chamber (14),
causing said liquid fuel to contact with said surface area increasing means (18),
supplying an oxidizer (30) into said combustion chamber (14) and
causing said oxidizer (30) to contact with said surface area increasing means (18), **characterized in that** hydrogen peroxide is used as said oxidizer, and that the liquid fuel supply means (12) and the oxidizer supply means (10) are arranged respectively to jet the liquid fuel and the oxidizer toward the same position on said surface area increasing means (18).

## Patentansprüche

1. Antriebsvorrichtung, umfassend:
eine Brennkammer (14), Mittel (12) zum Zuführen von flüssigem Treibstoff, die sich zu der Brennkammer hin öffnen,
Mittel (18) zur Vergrößerung der Oberfläche, die in der Brennkammer (14) vorgesehen sind,
Vorwärmmittel, die in der Brennkammer vorgesehen und mit den Mittel (18) zum Vergrößern der Oberfläche verbunden sind, um Wärme zuzuführen,
Mittel (10) zum Zuführen von Oxidator, die sich zu der Brennkammer (14) hin öffnen, und
Mittel zum Speichern von Oxidator, die mit den Mitteln (10) zum Zuführen von Oxidator verbunden sind,
**dadurch gekennzeichnet,**
**daß** die Antriebsvorrichtung ferner Wasserstoffperoxid umfaßt, das in den Mitteln zum Speichern von Oxidator gespeichert ist, und
**daß** die Mittel (12) zum Zuführen von flüssigem Treibstoff (12) und die Mittel (10) zum Zuführen von Oxidator jeweils so angeordnet sind, daß der flüssige Treibstoff und der Oxidator in Richtung derselben Stelle auf den Mitteln (18) zur Vergrößerung der Oberfläche hin ausgestoßen werden.

2. Antriebsvorrichtung nach Anspruch 1, **dadurch gekennzeichnet, daß** die Mittel (18) zur Vergrößerung der Oberfläche in einer Form ausgebildet sind, die aus der aus einer Netzform, einer laminierten Netzform mit mehreren aufeinanderkaschierten Netzen darin, und einer Wabenform bestehenden Gruppe ausgewählt ist.

3. Antriebsvorrichtung nach Anspruch 1 oder 2, **dadurch gekennzeichnet, daß** eine chemische Substanz der Mittel (18) zur Vergrößerung der Oberfläche eine oder mehrere aus der aus Silber, Platin, Palladium, Ruthenium und Iridium bestehenden Gruppe ausgewählte ist.

4. Antriebsvorrichtung nach Anspruch 3, **dadurch gekennzeichnet, daß** die Mittel (18) zur Vergrößerung der Oberfläche einen aus einer Keramik bestehenden Träger und einen in Kontakt mit dem Träger angeordneten Katalysator umfaßt und daß eine chemische Substanz des Katalysators eine oder mehrere aus der aus Silber, Platin, Palladium, Ruthenium und Iridium bestehenden Gruppe ausgewählte ist.

5. Fliegendes Objekt, umfassend eine Antriebsvorrichtung nach einem der Ansprüche 1 bis 4.

6. Fliegendes Objekt nach Anspruch 5, **dadurch gekennzeichnet, daß** das fliegende Objekt ein künstlicher Satellit, ein auf einer Bewegungsbahn arbeitende Station, eine Mondsonde, eine Planetensonde, ein gelenktes Luft- und Raumfahrzeug oder eine Trägerrakete ist.

7. Zündverfahren für eine Antriebsvorrichtung, umfassend die Schritte des:
Vorwärmens von in einer Brennkammer (14) vorgesehenen Mitteln (18) zur Vergrößerung der Oberfläche,
Zuführens eines flüssigen Treibstoffs (32) in die Brennkammer (14),
Inkontaktbringens des flüssigen Treibstoffs mit den Mitteln (18) zur Vergrößerung der Oberfläche,
Zuführens eines Oxidators (30) in die Brennkammer (14) und
Inkontaktbringens des Oxidators (30) mit den Mitteln (18) zur Vergrößerung der Oberfläche,
**dadurch gekennzeichnet,**
**daß** als Oxidator Wasserstoffperoxid verwendet wird und
**daß** Mittel (12) zum Zuführen von flüssigem Treibstoff und Mittel (10) zum Zuführen von Oxidator jeweils so angeordnet sind, daß der flüssige Treibstoff und der Oxidator in Richtung zu derselben Stelle auf den Mitteln (10) zur Vergrößerung der Oberfläche hin ausgestoßen werden.
#

## Revendications

1. Dispositif de propulsion comportant :
une chambre de combustion (14),
des moyens d'alimentation en combustible liquide (12) s'ouvrant vers ladite chambre de combustion,
des moyens d'augmentation de surface (18) prévus dans ladite chambre de combustion (14),
des moyens de préchauffage prévus dans ladite chambre de combustion et relié aux dits moyens d'augmentation de surface (18) afin de délivrer de la chaleur,
des moyens d'alimentation en oxydant (10) s'ouvrant vers ladite chambre de combustion (14), et
des moyens de stockage d'oxydant reliés aux dits moyens d'alimentation en oxydant (10), **caractérisé en ce que** ledit dispositif de propulsion comporte en outre du peroxyde d'hydrogène stocké dans lesdits moyens de stockage d'oxydant, et **en ce que** les moyens d'alimentation en combustible liquide (12) et les moyens d'alimentation en oxydant (10) sont prévus de manière respective pour éjecter le combustible liquide et l'oxydant vers la même position sur lesdits moyens d'augmentation de surface (18).

2. Dispositif de propulsion selon la revendication 1, **caractérisé en ce que** lesdits moyens d'augmentation de surface (18) sont formés avec une forme quelconque choisie parmi le groupe d'une forme de filet, d'une forme de filet stratifiée dans laquelle une pluralité de filets sont stratifiés et une forme de nid d'abeilles.

3. Dispositif de propulsion selon la revendication 1 ou 2, **caractérisé en ce qu'**une espèce chimique desdits moyens d'augmentation de surface (18) est l'une quelconque ou plusieurs choisie(s) dans le groupe de l'argent, du platine, du palladium, du ruthénium et de l'iridium.

4. Dispositif de propulsion selon la revendication 3, **caractérisé en ce que** lesdits moyens d'augmentation de surface (18) comportent un support fabriqué en céramique et un catalyseur disposé en contact avec ledit support et une espèce chimique dudit catalyseur est l'une quelconque ou plusieurs choisie(s) dans le groupe de l'argent, du platine, du palladium, du ruthénium et de l'iridium.

5. Objet volant comportant un dispositif de propulsion selon l'une quelconque des revendications 1 à 4.

6. Objet volant selon la revendication 5, **caractérisé en ce que** ledit objet volant est l'un quelconque d'un satellite artificiel, une station de travail sur trajectoire, une sonde lunaire, une sonde planétaire, un engin aérospatial guidé et un véhicule de lancement.

7. Procédé d'allumage de dispositif de propulsion comportant les étapes consistant à :
préchauffer des moyens d'augmentation de surface (18) prévus dans une chambre de combustion (14),
délivrer un combustible liquide (32) dans ladite chambre de combustion (14),
amener ledit combustible liquide en contact avec lesdits moyens d'augmentation de surface (18),
délivrer un oxydant (30) dans ladite chambre de combustion (14) et
amener ledit oxydant à venir en contact avec lesdits moyens d'augmentation de surface (18), **caractérisé en ce que** du peroxyde d`hydrogéne est utilisé comme dit oxydant, et **en ce que** les moyens d'alimentation en combustible liquide (12) et les moyens d'alimentation en oxydant (10) sont prévus de manière respective pour éjecter le combustible liquide et l'oxydant vers la même position sur lesdits moyens d'augmentation de surface (18).
